# EUROPEAN PATENT SPECIFICATION

(11) **EP 2 475 221 B1**
(45) Date of publication and mention of the grant of the patent: **20.07.2016**
(21) Application number: 10813481.8
(22) Date of filing: 30.08.2010
(51) Int. Cl.: H05B 6/68, H05B 6/70, H05B 6/72

(54) **MICROWAVE HEATING DEVICE**
MIKROWELLENHEIZVORRICHTUNG
DISPOSITIF DE CHAUFFAGE À MICRO-ONDES

(30) Priority: 03.09.2009 JP 2009203263
(43) Date of publication of application: 11.07.2012
(73) Proprietor: Panasonic Corporation, Kadoma-shi Osaka 571-8501 (JP)
(72) Inventor: OOMORI, Yoshiharu, Osaka 540-6207 (JP); NOBUE, Tomotaka, Osaka 540-6207 (JP); YASUI, Kenji, Osaka 540-6207 (JP); MIHARA, Makoto, Osaka 540-6207 (JP)
(74) Representative: Schwabe - Sandmair - Marx
(86) International application number: PCT/JP2010/005317
(87) International publication number: WO 2011/027529

(56) References cited:
- EP-A1- 2 051 564
- WO-A1-2009/050893
- WO-A1-2009/139136
- WO-A1-2009/157110
- JP-A- 62 195 892
- JP-A- 2008 066 292
- JP-A- 2008 269 793
- JP-A- 2009 032 638

## Description

### Technical Field

The present invention relates to a microwave heating device including microwave generating means configured using semiconductor devices.

### Background Art

As conventional microwave heating devices including microwave generating means constructed by using semiconductor devices, there have been suggested a microwave heating device including an oscillation portion constructed by a semiconductor device, a plurality of amplification portions for amplifying output of the oscillation portion, a heating chamber for placing an object to be heated therein and heating the same, a feeding portion for supplying microwaves to the heating chamber, and an impedance detection portion for detecting an impedance of the feeding portion (refer to Patent Literature 1, for example). The microwave heating device disclosed in Patent Literature 1 aims at controlling an oscillation frequency of the oscillation portion based on the results of detections by the impedance detection portion, for enabling stabilized cooking without inducing heating unevenness within the heating chamber.

Further, Patent Literature 2 discloses a microwave heating device including a microwave heating power supply capable of changing the oscillation frequency thereof, an antenna for radiating microwave electric power to a heating chamber, and a detector for detecting reflected electric power from the antenna. This conventional microwave heating device is adapted to track the frequency of the microwave heating power supply which minimizes the reflected electric power and to drive the microwave heating power supply at about the detected frequency, thereby driving it with higher electric-power efficiency.

Further, Patent Literature 3 discloses a microwave heating device including an oscillation portion constructed by semiconductor devices, a dividing portion for dividing the output of the oscillation portion into a plurality of parts, a plurality of amplification portions for amplifying the outputs of the oscillation portion which have been resulted from the division, a synthesis portion for synthesizing the outputs of the amplification portions, and a phase shifter provided between the dividing portion and the amplification portions. The microwave heating device disclosed in Patent Literature 3 has a structure for changing the electric-power ratio between the two outputs through phase control by the phase shifter or a structure for controlling the phases of the two outputs to be the same phase or reversed phases.

JP2008 269793Aand JP2009 032638Adisclose a microwave heating device according to the preamble of claim 1.

### Citation List

### Patent Literatures

Patent Literature 1: Japanese Unexamined Patent Publication No. 59-165399
Patent Literature 2: Japanese Examined Patent Publication No. 62-048354
Patent Literature 3: Japanese Unexamined Patent Publication No. 56-132793

### Summary of Invention

### Technical Problem

However, as will be described later, the aforementioned conventional microwave heating devices have had problems of difficulty in performing heating processing, in desired states, on different to-be-heated objects of various types which have various shapes and volumes and are being housed in the heating chamber, with their feeding systems.

With conventional microwave heating devices, it is possible to control the heating state and to perform heating operations with higher electric-power efficiency, by optimizing the oscillation frequency according to the results of detections of the impedance of the heating chamber and reflected electric power therefrom. However, by feeding microwave electric power from a single portion, for to-be-heated objects within the heating chamber, it has been impossible to sufficiently and properly address different to-be-heated objects of various types which have various shapes and volumes. Furthermore, with such a microwave heating device including an oscillation portion formed from a semiconductor device, in order to form microwave outputs equivalent to those of conventional commercially-available microwave ovens employing magnetrons in their oscillation portions, it is possible to provide a plurality of final-stage amplification portions employing semiconductor devices such that microwaves are propagated to respective a plurality of feeding portions provided in the heating chamber from the plurality of final-stage amplification portions, which can realize most inexpensive structure having stabilized performance.

In cases of applying the structures of the aforementioned conventional microwave heating devices to feeding portions at a plurality of positions, it is impossible to grasp the influence of electric power transmitted between the feeding portions only by detecting the impedance of the heating chamber, which induces larger detection errors. Further, by operating the feeding portions at the plurality of positions at the same oscillation frequency and by performing control for tracking the oscillation frequency, it is impossible to induce a larger difference from cases of feeding electricity from a single portion and, therefore, it has been impossible to sufficiently address different to-be-heated objects of various types which have various shapes and volumes.

Further, in cases of applying the structures of the conventional microwave heating devices to feeding portions at a plurality of positions, it is necessary to perform oscillation-frequency control and phase-difference control for all combination conditions of the feeding portions at the plurality of positions, thereby inducing the problem of necessity of a longer time period for detecting reflected electric power from the heating chamber. This induces the problem that an excessively longer time period is taken before the start of actual heating operations, after the user makes setting.

The present invention has been made in order to overcome the aforementioned problems in the conventional microwave heating devices and aims at providing a microwave heating device capable of detecting, in a shorter time period, heating conditions for heating, in desired states, different to-be-heated objects of various types which have various shapes and volumes and, then, heating the to-be-heated objects under these heating conditions and, further, capable of greatly reducing microwave electric power returned from the heating chamber (reflected electric power) during heating operations for heating to-be-heated objects with higher efficiency.

### Solution to Problem

A microwave heating device in a first aspect of the present invention according to claim 1 includes:
a heating chamber adapted to house a to-be-heated object;
an oscillation portion formed from a semiconductor device;
an electric-power dividing portion adapted to divide an output of the oscillation portion into a plurality of parts;
a phase variable portion adapted to change output phases of the electric-power dividing portion;
a plurality of amplification portions adapted to amplify, in electric power, outputs of the phase variable portion or the electric-power dividing portion;
a plurality of feeding portions adapted to feed outputs of the amplification portions to the heating chamber;
a plurality of electric-power detection portions adapted to detect reflected electric power propagating to the amplification portions from the heating chamber through the feeding portions; and
a control portion adapted to control an oscillation frequency of the oscillation portion and output phases of the phase variable portion, wherein
the control portion includes a frequency sweeping portion adapted to perform a frequency detection operation for acquiring reflected electric power detected by the electric-power detection portions while changing the oscillation frequency of the oscillation portion and fixing the output phases of the phase variable portion, for detecting a frequency sweeping characteristic,
a phase sweeping portion adapted to perform a phase detection operation for acquiring reflected electric power detected by the electric-power detection portions while changing a phase value of the phase variable portion and fixing the oscillation frequency of the oscillation portion, for detecting a phase sweeping characteristic, and
a sweeping control portion which is adapted to perform control for is adapted to determine an oscillation frequency and a phase value for use in heating the to-be-heated object, from the frequency sweeping characteristic and the phase sweeping characteristic which are detected by alternately repeating a frequency detection operation by the frequency sweeping portion and a phase detection operation by the phase sweeping portion wherein, and wherein

With the microwave heating device having the aforementioned structure in the first aspect, it is possible to detect, in a shorter time period, an oscillation frequency and a phase value as heating conditions which minimize the reflected electric power and, therefore, it is possible to start, in a shorter time period, optimum heating operations on different to-be-heated objects of various types which have various shapes and volumes.

In a second aspect of the present invention, in the microwave heating device in the first aspect, the sweeping control portion may be adapted to determine an oscillation frequency and a phase value for use in heating the to-be-heated object, from a frequency sweeping characteristic detected through a frequency detection operation by the frequency sweeping portion and a phase sweeping characteristic detected through a phase detection operation by the phase sweeping portion, before the start of heating of the to-be-heated object.
the sweeping control portion is adapted to perform, at first, a frequency detection operation by the frequency sweeping portion for detecting an oscillation frequency which minimizes reflected electric power, and then, is adapted to perform, a phase detection operation by the phase sweeping portion while fixing the oscillation frequency of the oscillation portion to the detected oscillation frequency, for detecting output phases which minimize reflected electric power, and thereafter, is adapted to alternately repeat a frequency detection operation by the frequency sweeping portion while fixing the output phases of the phase variable portion to a detected phase value, and a phase detection operation by the phase sweeping portion while fixing the oscillation frequency of the oscillation portion to a detected oscillation frequency

In a third aspect of the present invention, in the microwave heating device in the first or second aspect, the sweeping control portion may be adapted to store, after performing a frequency detection operation by the frequency sweeping portion, at least the phase value to which the phase variable portion has been fixed, an oscillation frequency which minimized the reflected electric power, and a minimum value of reflected electric power, in the previous frequency detection operation by the frequency sweeping portion.

In fourth aspect of the present invention, in the microwave heating device in the first or second aspect, the sweeping control portion may be adapted to store, after performing a phase detection operation by the phase sweeping portion, at least the oscillation frequency to which the oscillation portion has been fixed, a phase value which minimized the reflected electric power, and a minimum value of reflected electric power, in the previous phase detection operation by the phase sweeping portion. the sweeping control portion is adapted to alternately repeat a frequency detection operation by the frequency sweeping portion and a phase detection operation by the phase sweeping portion, until a predetermined completion determination condition is satisfied.

In a fith aspect of the present invention, in the microwave heating device in any one of the first to third aspects, the sweeping control portion may be adapted to set a first completion determination condition that a minimum value of reflected electric power detected through a frequency detection operation by the frequency sweeping portion and a phase detection operation by the phase sweeping portion has fallen below a predetermined threshold value, and the sweeping control portion may be adapted to stop an operation for repeating a frequency detection operation by the frequency sweeping portion and a phase detection operation by the phase sweeping portion, when the first completion determination condition is satisfed.

In a sixth aspect of the present invention, in the microwave heating device in any one of the first to third aspects, the sweeping control portion may be adapted to set a second completion determination condition that, in an operation for repeating a frequency detection operation by the frequency sweeping portion and a phase detection operation by the phase sweeping portion, a detected oscillation frequency, or phase value be different from the oscillation frequency or the phase value detected through the previous frequency detection operation or the previous phase detection operation by an amount smaller than a predetermined threshold value, and the sweeping control portion may be adapted to stop the operation for repeating a frequency detection operation by the frequency sweeping portion and a phase detection operation by the phase sweeping portion, when the second completion determination condition is satisfied.

In a seventh aspect of the present invention, in the microwave heating device in any one of the first to third aspects, the sweeping control portion may be adapted to set a third completion determination condition that the number of times a frequency detection operation by the frequency sweeping portion and a phase detection operation by the phase sweeping portion have been repeated has reached a predetermined number, and the sweeping control portion may be adapted to stop an operation for repeating a frequency detection operation by the frequency sweeping portion and a phase detection operation by the phase sweeping portion, when the third completion determination condition is satisfied.

In a eight aspect of the present invention, in the microwave heating device in the sixth aspect, the sweeping control portion may be adapted to, after stopping the operation for repeating a frequency detection operation by the frequency sweeping portion and a phase detection operation by the phase sweeping portion based on the second completion determination condition, store an oscillation frequency and a phase value which minimize reflected electric power and a minimum value of reflected electric power which have been detected through the frequency detection operations by the frequency sweeping portion and the phase detection operations by the phase sweeping portion, further perform a frequency detection operation by the frequency sweeping portion by fixing the phase value of the phase variable portion to a phase value different from the fixed phase value in the first frequency detection operation by the frequency sweeping portion and, further, perform, again, an operation for repeating a frequency detection operation by the frequency sweeping portion and a phase detection operation by the phase sweeping portion.

In a ninth aspect, of the present invention, in the microwave heating device in the seventh aspect, the sweeping control portion may be adapted to, after stopping the operation for repeating a frequency detection operation by the frequency sweeping portion and a phase detection operation by the phase sweeping portion based on the third completion determination condition, store an oscillation frequency and a phase value which minimize reflected electric power and a minimum value of reflected electric power which have been detected through the frequency detection operations by the frequency sweeping portion and the sweeping operations by the phase sweeping portion, further perform a frequency detection operation by the frequency sweeping portion by fixing the phase value of the phase variable portion to a phase value different from the fixed phase value in the first frequency detection operation by the frequency sweeping portion and, further, perform, again, an operation for repeating a frequency detection operation by the frequency sweeping portion and a phase detection operation by the phase sweeping portion.

In a tenth aspect of the present invention, in the microwave heating device in any one of the first to third aspects, the sweeping control portion may be adapted to start a heating operation, by employing, as a heating condition, a frequency and a phase value which minimize the reflected electric power which have been detected and stored through an operation for repeating a frequency detection operation by the frequency sweeping portion and a phase detection operation by the phase sweeping portion.

With the microwave heating device having the aforementioned structure according to the present invention, it is possible to detect, in a shorter time period, a frequency and output phases as heating conditions for properly heating a to-be-heated object, with reflected electric power equal to or less than a predetermined threshold value. Further, with the microwave heating device according to the present invention, it is possible to optimally control the oscillation frequency and the output phases based on information indicating heating conditions resulted from detections, which enables certainly heating, in desired states, different to-be-heated objects of various types which have various shapes and volumes, without inducing heating unevenness, and also enables greatly reducing the microwave electric power returned from the heating chamber (reflected electric power) for enabling heating operations with higher efficiency.

### Advantageous Effects of Invention

With the microwave heating device according to the present invention, it is possible to detect, in a shorter time period, heating conditions for different to-be-heated objects of various types which have various shapes and volumes and to heat such to-be-heated objects in desired states, anytime, and, furthermore, it is possible to reduce the microwave electric power returned from the heating chamber during heating operations, for realizing heating operations with higher efficiency.

### Brief Description of Drawings

Fig. 1 is a schematic diagram illustrating a structure of a microwave heating device of a first embodiment according to the present invention.
Fig. 2 is a characteristic diagram illustrating an amount of reflected electric power with respect to an oscillation frequency and a phase value in the microwave heating device of the first embodiment according to the present invention.
Fig. 3 is a flow chart for determining heating conditions in the microwave heating device of the first embodiment according to the present invention.
Fig. 4 is a flow chart illustrating an operation for detecting a frequency sweeping characteristic in the microwave heating device of the first embodiment according to the present invention.
Fig. 5 is a flow chart illustrating an operation for detecting a phase sweeping characteristic in the microwave heating device of the first embodiment according to the present invention.

### Description of Embodiments

Hereinafter, with reference to the accompanying drawings, a microwave oven will be described as an embodiment of a microwave heating device according to the present invention. The microwave heating device according to the present invention is not limited to the structure of the microwave oven which will be described in the following embodiment and is intended to include electromagnetic-wave heating devices structured based on technical concepts equivalent to the technical concepts which will be described in the following embodiment and based on technical common senses in the present technical field.

### (First Embodiment)

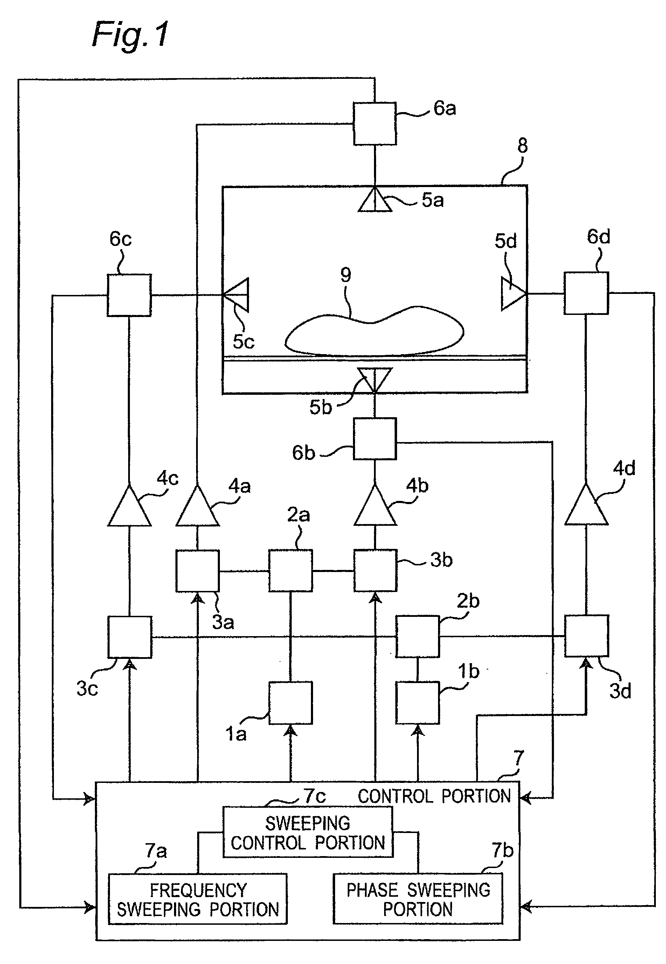

Fig. 1 is a schematic diagram illustrating a structure of a microwave oven as a microwave heating device of a first embodiment according to the present invention, wherein a state where an object 9 to be heated is housed within a heating chamber 8 is schematically illustrated.

Referring to Fig. 1, a microwave generating portion in the microwave heating device according to the first embodiment includes oscillation portions 1a and 1b constituted by semiconductor devices, electric-power dividing portions 2a and 2b adapted to divide the outputs of the oscillation portions 1a and 1b into two parts, amplification portions 4a, 4b, 4c and 4d (hereinafter, abbreviated to amplification portions 4a to 4d) constituted by semiconductor devices for amplifying the respective outputs of the electric-power dividing portions 2a and 2b, feeding portions 5a, 5b, 5c and 5d (hereinafter, abbreviated to feeding portions 5a to 5d) for feeding, to the inside of the heating chamber 8, the microwave outputs having been amplified by the amplification portions 4a to 4d, phase variable portions 3a, 3b, 3c and 3d (hereinafter, abbreviated to phase variable portions 3a to 3d) which are provided in the microwave propagation paths for connecting the electric-power dividing portions 2a and 2b and the amplification portions 4a to 4d to each other and are adapted to induce arbitrary phase differences between their inputs and outputs, electric-power detection portions 6a, 6b, 6c and 6d (hereinafter, abbreviated to electric-power detection portions 6a to 6d) which are provided in the microwave propagation paths for connecting the amplification portions 4a to 4d and the feeding portions 5a to 5d to each other and are adapted to detect microwave electric power returned from the heating chamber 8 to the respective amplification portions 4a to 4d through the feeding portions 5a to 5d, and a control portion 7 adapted to control the oscillation frequencies of the oscillation portions 1a and 1b and the output phases of the phase variable portions 3a to 3d, according to the reflected electric power detected by the electric-power detection portions 6a to 6d.

The control portion 7 functionally includes a frequency sweeping portion 7a, a phase sweeping portion 7b, and a sweeping control portion 7c, as will be described later. In this case, the frequency sweeping portion 7a, the phase sweeping portion 7b, and the sweeping control portion 7c are structured to be included in an operational processing device constituting the control portion 7 and can be constituted by software.

Hereinafter, there will be described operations of the microwave heating device having the aforementioned structure according to the first embodiment.

At first, the to-be-heated object 9 is housed within the heating chamber 8, heating-setting information is inputted, by a user, to an operation portion (not illustrated) in the microwave heating device, and heating processing is started. The control portion 7, to which a heating-processing starting signal has been inputted from the operation portion, searches for and determines optimum heating conditions for the to-be-heated object 9. After determining the heating conditions, the control portion 7 outputs control signals, to the microwave generating portion, according to the determined heating conditions, thereby causing the microwave generating portion to start a heating operation. At this time, the control portion 7 drives a driving power supply (not illustrated), for supplying desired electric power to the oscillation portions 1a and 1b, the respective amplification portions 4a to 4d, and the like.

At this time, the oscillation portions 1a and 1b are supplied, from the driving power supply, with voltage signals for setting the oscillation frequencies of the oscillation portions 1a and 1b to 2450 MHz, for example, and the oscillation portions 1a and 1b starts oscillating. After the oscillation portions 1a and 1b start oscillating, the outputs of the oscillation portions 1a and 1b are each divided into about halves by the electric-power dividing portions 2a and 2b, so that microwave electric power is supplied, therefrom, to the four microwave propagation paths.

Through the four microwave propagation paths after the electric-power dividing portions 2a and 2b, the controlled electric power from the driving power supply is inputted to each of the amplification portions 4a to 4d, thereby causing each of the amplification portions 4a to 4d to operate. In the four microwave propagation paths, there are provided the respective amplification portions 4a to 4d, the respective electric-power detection portions 6a to 6d, and the respective feeding portions 5a to 5d, wherein the amplification portions 4a to 4d, the electric-power detection portions 6a to 6d, and the feeding portions 5a to 5d in the respective microwave propagation paths are operated in parallel. The respective microwave electric powers are fed to the inside of the heating chamber 8, through the amplification portions 4a to 4d, the electric-power detection portions 6a to 6d, and the feeding portions 5a to 5d in the respective microwave propagation paths.

Out of the microwave electric power fed to the inside of the heating chamber 8, the microwave electric power which has not been absorbed by the to-be-heated object 9 and the like is returned, as reflected electric power, to the microwave propagation paths through the feeding portions 5a to 5d. The reflected electric power returned to the respective feeding portions 5a to 5d is detected by the electric-power detection portions 6a to 6d. The electric-power detection portions 6a to 6d send, to the control portion 7, signals proportional to the amounts of detected reflected electric power. Accordingly, the control portion 7 can recognize the amounts of reflected electric power received by the respective feeding portions 5a to 5d.

In a stage prior to the transition to an actual heating operation through microwave heating, the control portion 7 detects changing characteristics of reflected electric power at the respective feeding portions 5a to 5d with respect to the oscillation frequency and the output phases, further selects a frequency and a phase value which minimize the reflected electric power, and determines heating conditions.

A changing characteristic of reflected electric power with respect to the frequency (a frequency sweeping characteristic) can be obtained by performing a reflected-electric-power detection operation for detecting, with the electric-power detection portions 6a to 6d, the reflected electric power received by the feeding portions 5a to 5d, while performing a frequency sweeping operation for changing the oscillation frequency of the oscillation portions 1a and 1b from 2400 MHz to 2500 MHz with a pitch of 1 MHz, for example (a frequency detection operation).

A changing characteristic of reflected electric power with respect to the phase value (a phase sweeping characteristic) can be obtained by performing a reflected-electric-power detection operation while performing a phase sweeping operation for changing the output phase difference induced through the phase variable portions 3a to 3d, from 0 degrees to 360 degrees, with a pitch of 10 degrees, for example (a phase detection operation).

In the microwave heating device according to the first embodiment, before the start of heating operations, the control portion 7 performs operations as follows, in order to detect an optimum frequency and phase value for heating the to-be-heated object 9 and to determine heating conditions.

In the control portion 7, the frequency sweeping portion 7a performs a frequency sweeping operation for changing the oscillation frequency of the oscillation portions 1a and 1b, while fixing the output phases of the phase variable portions 3a to 3d to certain phase values. Further, the frequency sweeping portion 7a performs a frequency detection operation for acquiring information about reflected electric power detected by the electric-power detection portions 6a to 6d, concurrently with the frequency sweeping operation, in order to detect a frequency sweeping characteristic.

The phase sweeping portion 7b in the control portion 7 performs a phase sweeping operation for changing the output phases of the phase variable portions 3a to 3d, while fixing the oscillation frequency of the oscillation portions 1a and 1b to a certain frequency. Further, the phase sweeping portion 7b performs a phase detection operation for acquiring information about reflected electric power detected by the electric-power detection portions 6a to 6d, concurrently with the phase sweeping operation, in order to detect a phase sweeping characteristic.

The sweeping control portion 7c in the control portion 7 performs control for alternately repeating frequency detection operations by the frequency sweeping portion 7a and phase detection operations by the phase sweeping portion 7b and, further, determines an optimum frequency and an optimum phase value for heating the to-be-heated object, based on the frequency sweeping characteristics and the phase sweeping characteristics which have been detected (a heating-condition determination operation). The heating-condition determination operation by the control portion 7 will be described later in detail.

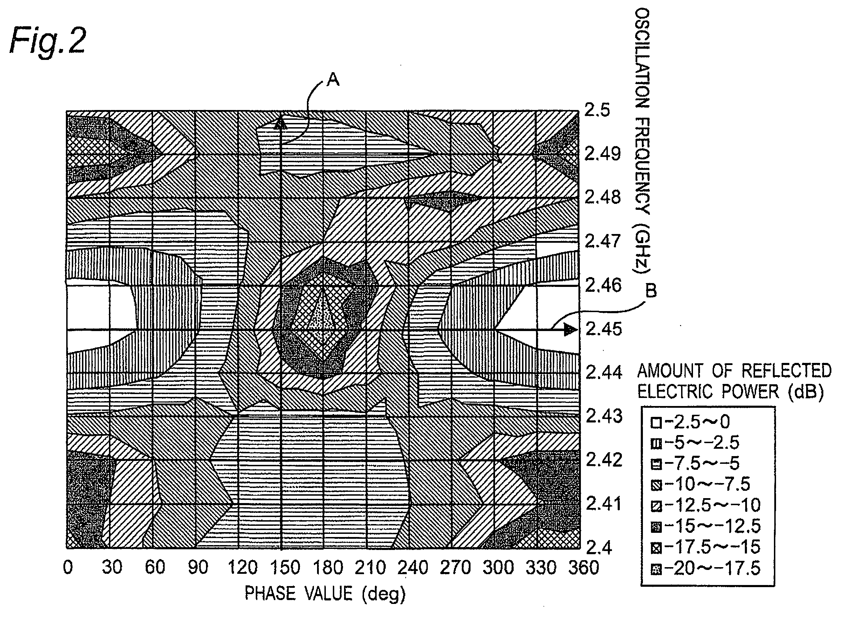

Fig. 2 is a characteristic diagram illustrating an amount of reflected electric power with respect to the frequency and the phase difference in the microwave heating device according to the first embodiment. By performing reflected-electric power detection operations while performing frequency sweeping operations by setting the phase difference between the plurality of feeding portions to each phase value described above (with a 10-degree pitch, for example), a characteristic diagram as illustrated in Fig. 2 can be obtained.

Normally, such a characteristic diagram of the amount of reflected electric power is completed, by performing reflected-electric-power detection operations while performing a frequency sweeping operation for each phase value as described above. In order to obtain all pieces of data by performing the aforementioned operations, in cases of detecting the phase value with a 10-degree pitch as described above, it is necessary to perform a frequency sweeping operation 36 times and, further, it is necessary to perform an operation for detecting the reflected electric power at each of the set oscillation frequencies. Furthermore, it is necessary to determine heating conditions for optimum heating operations for each combination of feeding portions out of the plurality of feeding portions, which necessitates individually performing oscillation-frequency control for the respective plurality of oscillation portions 1a and 1b, and output-phase control for respective combinations of the plurality of phase variable portions 3a and 3b, and 3c and 3d, thereby necessitating a larger amount of detection operations.

However, in the present invention, as will be described later in detail, by performing a heating-condition determination operation for performing reflected-electric-power detection operations through frequency sweeping operations (the frequency detection operation) and reflected-electric-power detection operations through phase sweeping operations (the phase detection operation), in combination with each other, it is possible to determine a frequency and a phase value which minimize the reflected electric power in a shorter time period.

### [Heating-Condition Determination Operations]

Hereinafter, there will be described heating-condition determination operations for determining heating conditions for obtaining optimum heating operations with the microwave heating device according to the first embodiment of the present invention. In the first embodiment of the present invention, a heating-condition determination operation refers to an operation for detecting an optimum oscillation frequency fopt and an optimum phase value Φopt which make the reflected electric power P(n) equal to or less than a predetermined threshold value, and for determining the optimum oscillation frequency fopt and the optimum phase value Φopt, which have been detected, to be optimum heating conditions, in order to realize optimum heating operations.

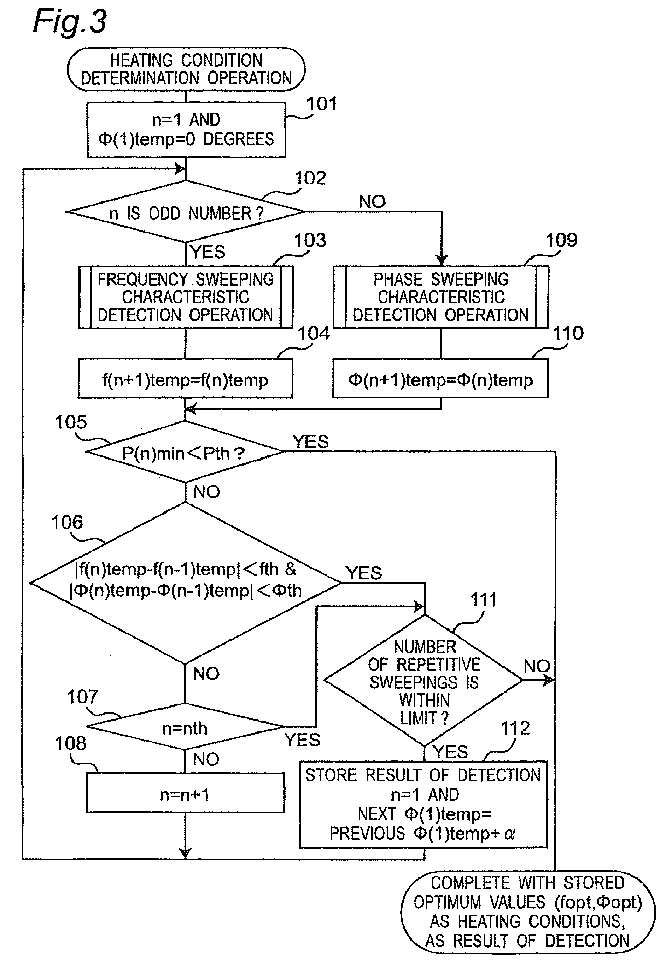

Fig. 3 is a flow chart illustrating a heating-condition determination operation in the microwave heating device according to the first embodiment of the present invention.

The heating-condition determination operation includes performing repetitive sweeping operations for alternately and repeatedly performing an operation for detecting a frequency sweeping characteristic (step 103) and an operation for detecting a phase sweeping characteristic (step 109) for obtaining an optimum oscillation frequency fopt and an optimum phase value Φopt which make the reflected electric power P(n) equal to or less than the predetermined threshold value, thereby determining heating conditions. In this case, "n" is an integer which is a variable number to be incremented every time a repetitive sweeping operation for a frequency-sweeping-characteristic detection operation or a phase-sweeping-characteristic detection operation has been performed, in the heating-condition determination operation.

At first, there will be described an operation for detecting a frequency sweeping characteristic (step 103 in Fig. 3) and an operation for detecting a phase sweeping characteristic (step 109 in Fig. 3) in the heating-condition determination operation.

### [Operations for Detecting Frequency Sweeping Characteristics]

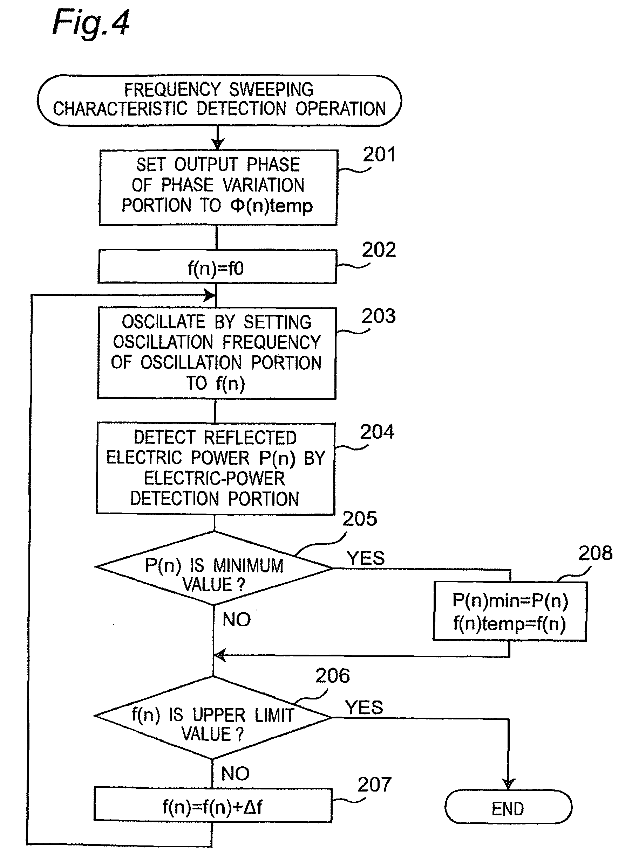

Fig. 4 is a flow chart illustrating an operation for detecting a frequency sweeping characteristic. At first, the output phase difference between each combination of phase variable portions (for example, 3a and 3b, and 3c and 3d) out of the phase variable portions 3a to 3d is fixed to a set value (Φ(n)temp) (step 201), and the oscillation frequency f(n) is set to an initial value f0 of, for example, 2400 MHz (step 202). Further, in the first detection operation, the set value (Φ(n)temp) of the output phase difference between each combination of phase variable portions out of the phase variable portions 3a to 3d is fixed to a predetermined value of, for example, 0 degrees. In the next and later detection operations, a phase value Φ(n)temp which minimizes the reflected electric power P(n), which has been obtained through the previous phase-sweeping-characteristic detection operation, has been stored and, therefore, the output phase difference between each combination of phase variable portions out of the phase variable portions 3a to 3d is fixed to the stored phase value Φ(n)temp.

Next, the oscillation portions 1a and 1b are oscillated by setting the oscillation frequency f(n) to the initial value f0 (for example, 2400 MHz) (step 203). When the oscillation frequency f(n) is set to the initial value f0, the reflected electric power P(n) returned from the feeding portions 5a to 5d is detected by the respective electric-power detection portions 6a to 6d (step 204).

The detected reflected electric power P(n) is compared with a minimum value P(n)min of reflected electric power, which has been stored (step 205). However, in the first detection operation, such a minimum value P(n)min of reflected electric power has not been stored yet and, therefore, the detected reflected electric power P(n) is stored, together with the oscillation frequency f(n) at this time (step 208).

Next, the oscillation frequency f(n) at this time is compared with an upper limit value of, for example, 2500 MHz (step 206). If the oscillation frequency f(n) has not reached the upper limit value, the oscillation frequency f(n) is increased by a predetermined width Δf (step 207), and the steps in and after step 203 are repeated.

In step 205, as a result of the comparison between the detected reflected electric power P(n) and the stored minimum value P(n)min, if the detected reflected electric power P(n) at this time is smaller than the stored minimum value P(n)min, the detected reflected electric power P(n) is stored as a new minimum value P(n)min, and the oscillation frequency f(n) at this time is stored as a temporary optimum oscillation frequency f(n)temp (step 208).

The aforementioned frequency-sweeping-characteristic detection operation is performed, until the swept oscillation frequency reaches the upper limit value of, for example, 2500 MHz. If the oscillation frequency has reached the upper limit value, in the frequency-sweeping detection operation, the minimum value P(n)min of reflected electric power and the temporary optimum oscillation frequency f(n)temp which have been stored at this time are determined to be the result of the detection through the current frequency-sweeping-characteristic detection operation, and the current frequency-sweeping-characteristic detection operation (step 103 in Fig. 3) is completed.

### [Operations for Detecting Phase Sweeping Characteristics]

Next, there will be described an operation for detecting a phase sweeping characteristic (step 109 in Fig. 3) in the heating-condition determination operation.

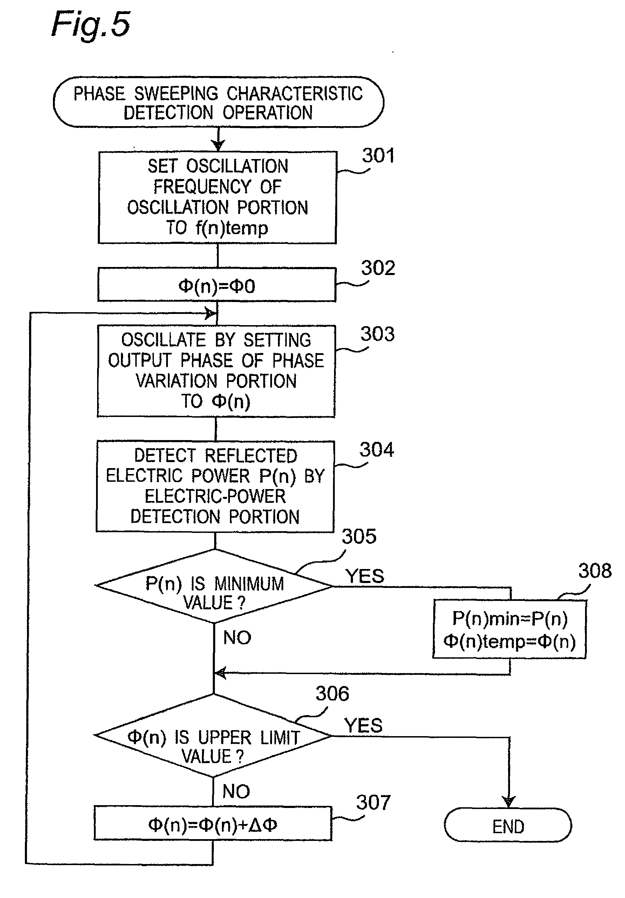

Fig. 5 is a flow chart illustrating an operation for detecting a phase sweeping characteristic. At first, the oscillation frequency of the oscillation portions 1a and 1b is fixed to a set value (f(n)temp) (step 301), and the phase value Φ(n) is set to an initial value Φ0 of, for example, 0 degrees (step 302). At this time, the oscillation frequency of the oscillation portions 1a and 1b is fixed to a temporary optimum oscillation frequency f(n)temp which makes the reflected electric power have a minimum value P(n)min, which has been obtained through the previous frequency-sweeping-characteristic detection operation.

Next, the oscillation portion 1a and 1b are oscillated, in a state where the output phase difference between each combination of phase variable portions out of the phase variable portions 3a to 3d (for example, 3a and 3b, and 3c and 3d) is set to the initial value Φ0 (step 303). At this time, the reflected electric power P(n) returned from the feeding portions 5a to 5d is detected by the electric-power detection portions 6a to 6d (step 304).

The detected reflected electric power P(n) is compared with the minimum value P(n)min of reflected electric power which has been stored (step 305). The minimum value P(n)min of reflected electric power which is compared therewith is the minimum value P(n)min of reflected electric power which has been stored as a result of the previous frequency-sweeping-characteristic detection operation.

If the detected reflected electric power P(n) is smaller than the minimum value P(n)min of reflected electric power which has been stored at this time, the detected reflected electric power P(n) is stored as a minimum value P(n)min of reflected electric power, and the phase value Φ(n) at this time is stored as a temporary optimum phase value Φ(n)temp (step 308).

The aforementioned phase-sweeping-characteristic detection operation is performed, until the swept phase value reaches an upper limit value of, for example, 360 degrees. In step 306, if the swept phase value has not reached the upper limit value, the phase value Φ(n) is increased by a predetermined width ΔΦ (step 307), and the steps in and after step 303 are repeated. That is, the operations in steps 303 to 306 are repeated, by oscillating the oscillation portions 1a and 1b, after setting the output phase difference between each combination of phase variable portions out of the phase variable portions 3a to 3d, to the phase value Φ(n) which has been increased by the predetermined width ΔΦ.

In step 306, if the swept phase value has reached the upper limit value, the minimum value P(n)min of reflected electric power and the temporary optimum phase value Φ(n) which have been stored at this time are determined to be the result of the detection through the current phase-sweeping-characteristic detection operation, and the current phase-sweeping-characteristic detection operation (step 109 in Fig. 3) is completed.

As described above, the microwave heating device according to the first embodiment is adapted to perform repetitive sweeping operations for alternately and repeatedly performing frequency-sweeping-characteristic detection operations (step 103) and phase-sweeping-characteristic detection operations (step 109) in a heating-condition determination operation.

Next, the heating-condition determination operation will be described, by returning to the flow chart illustrating the hating-condition determination operation for determining heating conditions in Fig. 3.

At first, the set value (Φ(1)temp) of the output phase difference between the phase variable portions 3a to 3d is set to 0 degrees (step 101). Further, the number of times n a repetitive sweeping operation has been repeated in the heating-condition determination operation is set to 1 (n = 1).

In step 102, a selection is made as follows. If the number of times n it has been repeated is an odd number, the operation shifts to a frequency-sweeping-characteristic detection operation (step 103), and if the number of times n it has been repeated is an even number, the operation shifts to a phase-sweeping-characteristic detection operation (step 109). The first detection operation is a frequency-sweeping-characteristic detection operation (step 103).

As described above, the frequency-sweeping-characteristic detection operation (step 103) is performed, by fixing the output phase to a set value (Φ(n)temp). The phase-sweeping-characteristic detection operation (step 109) is performed, by fixing the oscillation frequency to a set value (f(n)temp). As the set value (Φ(n)temp) of the output phase in the frequency-sweeping-characteristic detection operation (step 103), the heating condition which makes the reflected electric power have a minimum value P(n)min, which has been obtained as a result of the previous phase-sweeping-characteristic detection operation (step 109), is employed. Further, as the set value (f(n)temp) of the oscillation frequency in the phase-sweeping-characteristic detection operation (step 109), the heating condition which makes the reflected electric power have a minimum value P(n)min, which has been obtained as a result of the previous frequency-sweeping-characteristic detection operation (step 103), is employed.

However, in the first frequency-sweeping-characteristic detection operation (step 103), there is no previous output-phase set value. Therefore, the frequency-sweeping-characteristic detection operation (step 103) is performed, by setting the set value (Φ(1)temp) of the output phase to a predetermined value of, for example, 0 degrees (step 101).

As described above, the temporary optimum oscillation frequency f(n)temp which makes the reflected electric power have a minimum value P(n)min, as a result of the frequency-sweeping-characteristic detection operation (step 103), is used as the set value of the oscillation frequency (step 104), in the next phase-sweeping-characteristic detection operation (step 109) after the completion of the current frequency-sweeping-characteristic detection operation. Further, the temporary optimum phase value Φ(1)temp which makes the reflected electric power have a minimum value P(n)min, as a result of the phase-sweeping-characteristic detection operation (step 109), is used as the set value of the phase value (step 110), in the next frequency-sweeping-characteristic detection operation (step 103) after the completion of the current phase-sweeping-characteristic detection operation.

In the microwave heating device according to the first embodiment, the completion of the heating-condition determination operation for repeatedly performing frequency-sweeping-characteristic detection operations and phase-sweeping-characteristic detection operations is determined, based on the minimum value P(n)min of reflected electric power, the temporary optimum oscillation frequency f(n)temp, and the temporary optimum phase value Φ(n)temp, which are the results of detections through the respective detection operations.

A first completion determination condition is that the minimum value P(n)min of reflected electric power, which is a result of the detections obtained through the frequency-sweeping-characteristic detection operations and the phase-sweeping-characteristic detection operations which have been repeatedly performed, be lower than a threshold value (Pth) (step 105).

A second completion determination condition is that the temporary optimum oscillation frequency(f(n)temp) and the temporary optimum phase value (Φ(n)temp) obtained through the frequency-sweeping-characteristic detection operations and phase-sweeping-characteristic detection operations which have been repeatedly performed, be different from the previous values by amounts lower than threshold values (fth and Φth) (step 106). That is, the second completion determination condition is that the amount of the difference between the temporary optimum oscillation frequency (f(n-1)temp) resulted from the detection through the previous detection operation and the temporary optimum oscillation frequency (f(n)temp) resulted from the detection through the current detection operation be lower than the threshold value (fth) and, also, the amount of the difference between the temporary optimum phase value (Φ(n-1)temp) resulted from the detection through the previous detection operation and the temporary optimum phase value (Φ(n)temp) resulted from the detection through the current detection operation be lower than the threshold value (Φth).

A third completion determination condition is that the number of times n a sweeping operation has been repeatedly performed in frequency-sweeping-characteristic detection operations and phase-sweeping-characteristic detection operations has reached a threshold value nth (step 107).

When none of the first completion determination condition, the second completion determination condition, and the third completion determination condition described above has been satisfied, the number of times n a sweeping operation has been repeated is incremented by one (step 108), and the operation shifts to the next frequency-sweeping-characteristic detection operation (step 103) or the next phase-sweeping-characteristic detection operation (step 109).

If the first completion determination condition is satisfied, the heating-condition determination operation for repeating frequency-sweeping-characteristic detection operations and phase-sweeping-characteristic detection operations is completed. Accordingly, when the heating-condition determination operation has been completed based on the first completion determination condition, the temporary optimum oscillation frequency (f(n)temp) and the temporary optimum phase value (Φ(n)temp) which have been stored at this time are determined to be an optimum oscillation frequency (f(n)opt) and an optimum phase value (Φ(n)opt) as heating conditions, and a heating operation is started according to these heating conditions.

When the completion of the repetitive sweeping operations has been determined based on the second completion determination condition and the third completion determination condition, the minimum value P(n)min of reflected electric power at this time has exceeded the threshold value Pth. Therefore, in order to search for more preferable heating conditions, the results of the past repetitive sweeping detections are stored and, thereafter, the number of times n a repetitive sweeping operation has been repeated is reset to 1 and, also, the phase value (Φ(1)temp (for example, 0 degrees)) used as the fixed value in the first frequency-sweeping-characteristic detection operation in the previous heating-condition determination operation is increased by a predetermined value α (for example, 30 degrees) to provide a new phase value, which is to be used as a fixed phase value Φ(1)temp in the first frequency-sweeping-characteristic detection operation in the next heating-condition determination operation (step 112). In the state where the new set value is reset (n = 1), repetitive sweeping operations are performed, again, for performing frequency-sweeping-characteristic detection operations (step 103) and phase-sweeping-characteristic detection operations (step 109) in a heating-condition determination operation described above.

Further, a limit is imposed on the number of times a repetitive sweeping operation can be performed again (for example, twice) (step 111), and if the number of times a repetitive sweeping operation has been performed again reaches the limit, the heating-condition determination operation is completed. Accordingly, if the number of times a repetitive sweeping operation has been repeated reaches the repeat limit, even when the minimum value P(n)min of reflected electric power has not fallen below the threshold value Pth, the results of detections which minimize the reflected electric power, which have been obtained through the repetitive sweeping operations having been performed again are determined to be most preferable heating conditions, and the heating-condition determination operation is completed.

Next, there will be described a heating-condition determination operation for repeatedly performing frequency-sweeping-characteristic detection operations and phase-sweeping-characteristic detection operations, in the microwave heating device according to the first embodiment, with reference to a concrete example. That is, there will be described the heating-condition determination operation, by exemplifying a case where the characteristics of the amount of reflected electric power with respect to the frequency and the phase value are as illustrated in the characteristic diagram in Fig. 2, in a state where the to-be-heated object 9 is housed in the heating chamber 8.

In Fig. 2, the horizontal axis is a phase axis which represents the phase difference between the output phases of the phase variable portions 3a to 3d, in the range of 0 degrees to 360 degrees. The phase difference means the difference between the output phase values and means the difference between the output phase values set in the phase variable portions 3a and 3b, for example. The vertical axis in Fig. 2 is a frequency axis which represents the oscillation frequency of the oscillation portions 1a and 1b, in the range of 2400 kHz (2.4 GHz) to 2500 kHz (2.5 GHz). The graph illustrated in Fig. 2 is a contour graph of the amount of reflected electric power.

In repetitive sweeping operations for repeatedly performing frequency-sweeping-characteristic detection operations and phase-sweeping-characteristic detection operations, when a frequency-sweeping-characteristic detection operation is performed, the frequency-sweeping-characteristic detection operation is performed by employing the temporary optimum phase value Φ(n)temp detected through the previous phase-sweeping-characteristic detection operation, as the fixed value of the output phase difference between each combination of phase variable portions out of the phase variable portions 3a to 3d. That is, a frequency-sweeping characteristic detection operation is performed, by performing a sweeping operation for changing the oscillation frequency in the direction of the frequency axis, which is the vertical axis, in a state where the phase value is fixed to a certain phase value (Φ(n)temp) on the phase axis, which is the horizontal axis in Fig. 2. For example, the contour graph illustrated in Fig. 2 represents, for a case of a phase value (Φ(n)temp) of 150 degrees, the results of detections obtained by a sweeping operation for moving the oscillation frequency in the direction of the frequency axis (in the direction of an arrow A in Fig. 2), at 150 degrees on the phase axis. In the results of detections, a minimum value P(n)min of reflected electric power falls within the range of -15 to -12.5 dB, around an oscillation frequency of 2.45 GHz. Based on the results of detections, in the next phase-sweeping-characteristic detection operation, a sweeping operation for changing the phase value is performed, on the condition that the temporary optimum oscillation frequency f(n+1)temp is fixed to 2.45 GHz.

As described above, regarding the phase-sweeping characteristic detection operation, the phase-sweeping-characteristic detection operation is performed by using the temporary optimum oscillation frequency f(n+1)temp as the fixed value of the oscillation frequency of the oscillation portions 1a and 1b. That is, in the phase-sweeping-characteristic detection operation, a phase value which provides a minimum amount of reflected electric power is detected, in the direction of the phase axis, at the temporary optimum oscillation frequency f(n+1)temp being selected at this time.

For example, in the phase-sweeping-characteristic detection operation, a sweeping operation for moving the phase value in the direction of the phase axis at 2.45 GHz on the frequency axis (in the direction of an arrow B in Fig. 2) is performed, by employing, as the fixed value, the temporary optimum oscillation frequency f(n+1)temp = 2.45 GHz resulted from the previous detection. In the results of the detections, a minimum value P(n+1)min of reflected electric power falls within the range of -20 to -17.5 dB, around a phase value of 180 degrees. Based on the results of the detections, in the next frequency-sweeping-characteristic detection operation, a sweeping operation for changing the oscillation frequency is performed, on the condition that the temporary optimum phase value Φ(n+2)temp is fixed to 180 degrees.

As described above, in a heating-condition determination operation in the microwave heating device according to the first embodiment, a frequency which induces an amount of reflected electric power having a minimum value is detected by changing the oscillation frequency while fixing the phase value. Further, based on the result of the detection, a phase value which induces an amount of reflected electric power having a minimum value is detected by changing the phase value while fixing the oscillation frequency. Further, based on the result of the previous detection, a frequency which induces an amount of reflected electric power having a minimum value is detected, by changing the oscillation frequency while fixing the phase value. Thus, in the heating-condition determination operation, repetitive sweeping operations are performed based on the previous sweeping operations, which enables detecting, in a shorter time period, optimum heating conditions which minimize the amount of reflected electric power.

As described above, with the microwave heating device according to the first embodiment of the present invention, it is possible to determine a frequency and a phase value which minimize reflected electric power, from information acquired in a shorter time period. As a result thereof, optimum heating conditions can be determined in a shorter time period, and the output phases and the oscillation frequency of supplied microwave electric power can be controlled based on the determined optimum heating conditions, which enables certainly heating to-be-heated objects 9 of various types which have various shapes and volumes in desired states and, concurrently, enables reducing microwave electric power returned from the heating chamber 8, thereby enabling heating operations with higher efficiency.

Further, while there has been described an example where the respective phase variable portions 3a to 3d are provided in the four microwave propagation paths in the microwave heating device according to the first embodiment, they can be provided in only one of the microwave propagation paths resulted from the division by each electric-power dividing portion 2a and 2b.

Further, while there has been described an example where four microwave propagation paths are formed in the microwave heating device according to the first embodiment, the number of microwave propagation paths is not limited in the present invention, and the present invention can be applied to structures provided with a plurality of microwave propagation paths in association with a plurality of feeding portions provided in the heating chamber. Further, the microwave heating device according to the present invention can be structured to be provided with oscillation portions corresponding to the number of feeding portions, without employing electric-power dividing portions.

As described above, the microwave heating device according to the present invention includes a plurality of feeding portions and is adapted to adjust the oscillation frequency of microwave electric power to be fed thereto and the phase difference between the feeding portions, which enables certainly heating to-be-heated objects of various types which have various shapes and volumes in desired states and, concurrently, enables reducing microwave electric power returned from the heating chamber, thereby enabling heating operations with higher efficiency.

### Industrial Applicability

The microwave heating device according to the present invention can be also applied to heating devices which utilize induction heating as represented by microwave ovens, garbage disposers, various types of heating apparatuses which utilize induction heating such as microwave generators in plasma generators as semiconductor fabrication apparatuses, and the like.

### Reference Signs List

- 1a, 1b: Oscillation portion
- 2a, 2b: Electric-power dividing portion
- 3a, 3b, 3c, 3d: Phase variable portion
- 4a, 4b, 4c, 4d: Amplification portion
- 5a, 5b, 5c, 5d: Feeding portion
- 6a, 6b, 6c, 6d: Electric-power detection portion
- 7: Control portion
- 8: Heating chamber
- 9: Object to be heated

## Claims

1. A microwave heating device comprising:
a heating chamber (8) adapted to house a to-be-heated object (9);
an oscillation portion (1a, 1b) including a semiconductor device;
an electric-power dividing portion (2a, 2b) adapted to divide an output of the oscillation portion (1a, 1b) into a plurality of parts;
a phase variable portion (3a to 3d) adapted to change output phases of the electric-power dividing portion (2a, 2b);
a plurality of amplification portions (4a to 4d) adapted to amplify, in electric power, outputs of the phase variable portion (3a to 3d) or the electric-power dividing portion (2a, 2b);
a plurality of feeding portions (5a to 5d) adapted to feed outputs of the amplification portions (4a to 4d) to the heating chamber (8);
a plurality of electric-power detection portions (6a to 6d) adapted to detect reflected electric power propagating to the amplification portions (4a to 4d) from the heating chamber (8) through the feeding portions (5a to 5d); and
a control portion (7) adapted to control an oscillation frequency of the oscillation portion (1a, 1b) and output phases of the phase variable portion (3a to 3d),
**characterized in that**:
the control portion (7) includes
a frequency sweeping portion (7a) adapted to perform a frequency detection operation for acquiring reflected electric power detected by the electric-power detection portions (6a to 6d) while changing the oscillation frequency of the oscillation portion (1a, 1b) and fixing the output phases of the phase variable portion (3a to 3d), for detecting a frequency sweeping characteristic,
a phase sweeping portion (7b) adapted to perform a phase detection operation for acquiring reflected electric power detected by the electric-power detection portions (6a to 6d) while changing a phase value of the phase variable portion (3a to 3d) and fixing the oscillation frequency of the oscillation portion (1a, 1b), for detecting a phase sweeping characteristic, and
a sweeping control portion (7c) adapted to determine an oscillation frequency and a phase value for use in heating the to-be-heated object (9), from the frequency sweeping characteristic and the phase sweeping characteristic which are detected by alternately repeating a frequency detection operation by the frequency sweeping portion (7a) and a phase detection operation by the phase sweeping portion (7b),
wherein the sweeping control portion (7c) is adapted to perform, at first, a frequency detection operation by the frequency sweeping portion (7a) for detecting an oscillation frequency which minimizes reflected electric power, and then, is adapted to perform a phase detection operation by the phase sweeping portion (7b) while fixing the oscillation frequency of the oscillation portion (1a, 1b) to the detected oscillation frequency, for detecting output phases which minimize reflected electric power, and thereafter, is adapted to alternately repeat a frequency detection operation by the frequency sweeping portion (7a) while fixing the output phases of the phase variable portion to a detected phase value, and a phase detection operation by the phase sweeping portion (7b) while fixing the oscillation frequency of the oscillation portion (1a, 1b) to a detected oscillation frequency,
wherein the sweeping control portion (7c) is adapted to alternately repeat a frequency detection operation by the frequency sweeping portion (7a) and a phase detection operation by the phase sweeping portion (7b), until a predetermined completion determination condition is satisfied.

2. The microwave heating device according to claim 1, wherein
the sweeping control portion (7c) is adapted to determine an oscillation frequency and a phase value for use in heating the to-be-heated object (9), from a frequency sweeping characteristic detected in a frequency detection operation performed by the frequency sweeping portion (7a) and the phase sweeping characteristic detected in a phase detection operation performed by the phase sweeping portion (7b), before the start of heating of the to-be-heated object.

3. The microwave heating device according to claim 1 or 2, wherein
the sweeping control portion (7c) is adapted to store, after performing a frequency detection operation by the frequency sweeping portion, at least the phase value to which the phase variable portion has been fixed, an oscillation frequency which minimized the reflected electric power, and a minimum value of reflected electric power, in the previous frequency detection operation by the frequency sweeping portion.

4. The microwave heating device according to claim 1 or 2, wherein
the sweeping control portion (7c) is adapted to store, after performing a phase detection operation by the phase sweeping portion, at least the oscillation frequency to which the oscillation portion has been fixed, a phase value which minimized the reflected electric power, and a minimum value of reflected electric power, in the previous phase detection operation by the phase sweeping portion.

5. The microwave heating device according to any one of claims 1 to 3, wherein
the sweeping control portion (7c) is adapted to set a first completion determination condition that a minimum value of reflected electric power detected through a frequency detection operation by the frequency sweeping portion (7a) and a phase detection operation by the phase sweeping portion (7b) has fallen below a predetermined threshold value, and
the sweeping control portion (7c) is adapted to stop an operation for repeating a frequency detection operation by the frequency sweeping portion (7a) and a phase detection operation by the phase sweeping portion (7b), when the first completion determination condition is satisfied.

6. The microwave heating device according to any one of claims 1 to 3, wherein
the sweeping control portion (7c) is adapted to set a second completion determination condition that, in an operation for repeating a frequency detection operation by the frequency sweeping portion (7a) and a phase detection operation by the phase sweeping portion (7b), a detected oscillation frequency or phase value be different from the oscillation frequency or the phase value detected through the previous frequency detection operation or the previous phase detection operation by an amount smaller than a predetermined threshold value, and
the sweeping control portion (7c) is adapted to stop the operation for repeating a frequency detection operation by the frequency sweeping portion (7a) and a phase detection operation by the phase sweeping portion (7b), when the second completion determination condition is satisfied.

7. The microwave heating device according to any one of claims 1 to 3, wherein
the sweeping control portion (7c) is adapted to set a third completion determination condition that the number of times a frequency detection operation by the frequency sweeping portion (7a) and a phase detection operation by the phase sweeping portion (7b) have been repeated has reached a predetermined number, and
the sweeping control portion (7c) is adapted to stop an operation for repeating a frequency detection operation by the frequency sweeping portion (7a) and a phase detection operation by the phase sweeping portion (7b), when the third completion determination condition is satisfied.

8. The microwave heating device according to claim 6, wherein
the sweeping control portion (7c) is adapted to, after stopping the operation for repeating a frequency detection operation by the frequency sweeping portion (7a) and a phase detection operation by the phase sweeping portion (7b) based on the second completion determination condition, store an oscillation frequency and a phase value which minimize reflected electric power and a minimum value of reflected electric power which have been detected through the frequency detection operations by the frequency sweeping portion (7a) and the phase detection operations by the phase sweeping portion (7b), further perform a frequency detection operation by the frequency sweeping portion (7a) by fixing the phase value of the phase variable portion (3a to 3d) to a phase value different from the fixed phase value in the first frequency detection operation by the frequency sweeping portion (7a) and, further, perform, again, an operation for repeating a frequency detection operation by the frequency sweeping portion (7a) and a phase detection operation by the phase sweeping portion (7b).

9. The microwave heating device according to claim 7, wherein
the sweeping control portion (7c) is adapted to, after stopping the operation for repeating a frequency detection operation by the frequency sweeping portion (7a) and a phase detection operation by the phase sweeping portion (7b) based on the third completion determination condition, store an oscillation frequency and a phase value which minimize reflected electric power and a minimum value of reflected electric power which have been detected through the frequency detection operations by the frequency sweeping portion (7a) and the sweeping operations by the phase sweeping portion (7b), further perform a frequency detection operation by the frequency sweeping portion (7a) by fixing the phase value of the phase variable portion (3a to 3d) to a phase value different from the fixed phase value in the first frequency detection operation by the frequency sweeping portion (7a) and, further, perform, again, an operation for repeating a frequency detection operation by the frequency sweeping portion (7a) and a phase detection operation by the phase sweeping portion (7b).

10. The microwave heating device according to any one of claims 1 to 3, wherein
the sweeping control portion (7c) is adapted to start a heating operation, by employing, as a heating condition, a frequency and a phase value which minimize the reflected electric power which have been detected and stored through an operation for repeating a frequency detection operation by the frequency sweeping portion (7a) and a phase detection operation by the phase sweeping portion (7b).

## Patentansprüche

1. Mikrowellenheizvorrichtung, die Folgendes umfasst:
eine Heizkammer (8), die dafür ausgelegt ist, ein zu erhitzendes Objekt (9) aufzunehmen;
einen Oszillationsabschnitt (1a, 1b), der eine Halbleitervorrichtung enthält;
einen Abschnitt (2a, 2b) für die Aufteilung der elektrischen Leistung, der dafür ausgelegt ist, ein Ausgangssignal des Oszillationsabschnitts (1a, 1b) in mehrere Teile aufzuteilen;
einen phasenvariablen Abschnitt (3a bis 3d), der dafür ausgelegt ist, die Ausgangsphasen des Abschnitts (2a, 2b) für die Aufteilung der elektrischen Leistung zu verändern;
mehrere Verstärkungsabschnitte (4a bis 4d), die dafür ausgelegt sind, Ausgangssignale des phasenvariablen Abschnitts (3a bis 3d) oder des Abschnitts (2a, 2b) für die Aufteilung der elektrischen Leistung in der elektrischen Leistung zu verstärken;
mehrere Zuführabschnitte (5a bis 5d), die dafür ausgelegt sind, der Heizkammer (8) Ausgangssignale der Verstärkungsabschnitte (4a bis 4d) zuzuführen;
mehrere Abschnitte (6a bis 6d) für die Detektion der elektrischen Leistung, die dafür ausgelegt sind, die reflektierte elektrische Leistung, die sich von der Heizkammer (8) durch die Zuführabschnitte (5a bis 5d) zu den Verstärkungsabschnitten (4a bis 4d) ausbreitet, zu detektieren; und
einen Steuerabschnitt (7), der dafür ausgelegt ist, eine Oszillationsfrequenz des Oszillationsabschnitts (1a, 1b) und Ausgangsphasen des phasenvariablen Abschnitts (3a bis 3d) zu steuern,
**dadurch gekennzeichnet, dass**
der Steuerabschnitt (7) Folgendes umfasst:
einen Frequenzwobbelabschnitt (7a), der dafür ausgelegt ist, einen Frequenzdetektionsvorgang durchzuführen, um die reflektierte elektrische Leistung, die von den Abschnitten (6a bis 6d) für die Detektion der elektrischen Leistung während des Veränderns der Oszillationsfrequenz des Oszillationsabschnitts (1a, 1 b) und des Festhaltens der Ausgangsphasen des phasenvariablen Abschnitts (3a bis 3d), detektiert worden ist, zu erfassen, um eine Frequenzwobbeleigenschaft zu detektieren,
einen Phasenwobbelabschnitt (7b), der dafür ausgelegt ist, einen Phasendetektionsvorgang durchzuführen, um die reflektierte elektrische Leistung zu erfassen, die von den Abschnitten (6a bis 6d) für die Detektion der elektrischen Leistung, während ein Phasenwert des phasenvariablen Abschnitts (3a bis 3d) verändert wird und die Oszillationsfrequenz des Oszillationsabschnitts (1a, 1b) festgehalten wird, detektiert wird, um eine Phasenwobbeleigenschaft zu detektieren, und
einen Wobbeisteuerabschnitt (7c), der dafür ausgelegt ist, aus der Frequenzwobbeleigenschaft und der Phasenwobbeleigenschaft, die durch abwechselndes Wiederholen eines Frequenzdetektionsvorgangs durch den Frequenzwobbelabschnitt (7a) und eines Phasendetektionsvorgangs durch den Phasenwobbelabschnitt (7b) detektiert werden, eine Oszillationsfrequenz und einen Phasenwert zur Verwendung beim Erhitzen des zu erhitzenden Objekts (9) zu bestimmen,
wobei der Wobbelsteuerabschnitt (7c) dafür ausgelegt ist, zuerst durch den Frequenzwobbelabschnitt (7a) einen Frequenzdetektionsvorgang zum Detektieren einer Oszillationsfrequenz, die die reflektierte elektrische Leistung minimiert, durchzuführen und anschließend dafür ausgelegt ist, durch den Phasenwobbelabschnitt (7b) einen Phasendetektionsvorgang durchzuführen, während die Oszillationsfrequenz des Oszillationsabschnitts (1a, 1b) auf der detektierten Oszillationsfrequenz festgehalten wird, um Ausgangsphasen zu detektieren, die die reflektierte elektrische Leistung minimieren, und danach, dafür ausgelegt ist, abwechselnd einen Frequenzdetektionsvorgang durch den Frequenzwobbelabschnitt (7a), während die Ausgangsphasen des phasenvariablen Abschnitts auf einem detektierten Phasenwert festgehalten werden, und einen Phasendetektionsvorgang durch den Phasenwobbeiabschnitt (7b) zu wiederholen, während die Oszillationsfrequenz des Oszillationsabschnitts (1a, 1b) auf einer detektierten Oszillationsfrequenz festgehalten wird,
wobei der Wobbeisteuerabschnitt (7c) dafür ausgelegt ist, abwechselnd einen Frequenzdetektionsvorgang durch den Frequenzwobbelabschnitt (7a) und einen Phasendetektionsvorgang durch den Phasenwobbelabschnitt (7b) zu wiederholen, bis eine vorgegebene Fertigstellungsbestimmungsbedingung erfüllt ist.

2. Mikrowellenheizvorrichtung nach Anspruch 1, wobei
der Wobbelsteuerabschnitt (7c) dafür ausgelegt ist, vor dem Beginn des Erhitzens des zu erhitzenden Objekts aus einer Frequenzwobbeleigenschaft, die in einem Frequenzdetektionsvorgang, der durch den Frequenzwobbelabschnitt (7a) durchgeführt wird, detektiert wird und aus der Phasenwobbeleigenschaft, die in einem Phasendetektionsvorgang, der durch den Phasenwobbelabschnitt (7b) durchgeführt wird, detektiert wird, eine Oszillationsfrequenz und einen Phasenwert zur Verwendung beim Erhitzen des zu erhitzenden Objekts (9) zu bestimmen.

3. Mikrowellenheizvorrichtung nach Anspruch 1 oder 2, wobei
der Wobbelsteuerabschnitt (7c) dafür ausgelegt ist, in dem vorherigen Frequenzdetektionsvorgang durch den Frequenzwobbelabschnitt nach dem Durchführen eines Frequenzdetektionsvorgangs durch den Frequenzwobbelabschnitt zumindest den Phasenwert, auf dem der phasenvariable Abschnitt festgehalten worden ist, eine Oszillationsfrequenz, die die elektrische Leistung minimiert, und einen Tiefstwert der reflektierten elektrischen Leistung zu speichern.

4. Mikrowellenheizvorrichtung nach Anspruch 1 oder 2, wobei
der Wobbelsteuerabschnitt (7c) dafür ausgelegt ist, in dem vorhergehenden Phasendetektionsvorgang durch den Phasenwobbelabschnitt nach dem Durchführen eines Phasendetektionsvorgangs durch den Phasenwobbelabschnitt zumindest die Oszillationsfrequenz, auf der der Oszillationsabschnitt festgehalten worden ist, einen Phasenwert, der die reflektierte elektrische Leistung minimiert, und einen Tiefstwert der reflektierten elektrischen Leistung zu speichern.

5. Mikrowellenheizvorrichtung nach einem der Ansprüche 1 bis 3, wobei
der Wobbelsteuerabschnitt (7c) dafür ausgelegt ist, eine erste Fertigstellungsbestimmungsbedingung, dass ein Tiefstwert der reflektierten elektrischen Leistung, der durch einen Frequenzdetektionsvorgang durch den Frequenzwobbelabschnitt (7a) und durch einen Phasendetektionsvorgang durch den Phasenwobbelabschnitt (7b) detektiert worden ist, unter einen vorgegebenen Schwellwert gefallen ist, einzustellen und
der Wobbelsteuerabschnitt (7c) dafür ausgelegt ist, einen Vorgang des Wiederholens eines Frequenzdetektionsvorgangs durch den Frequenzwobbelabschnitt (7a) und eines Phasendetektionsvorgangs durch den Phasenwobbelabschnitt (7b) anzuhalten, wenn die erste Fertigstellungsbestimmungsbedingung erfüllt ist.

6. Mikrowellenheizvorrichtung nach einem der Ansprüche 1 bis 3, wobei
der Wobbelsteuerabschnitt (7c) dafür ausgelegt ist, eine zweite Fertigstellungsbestimmungsbedingung, dass sich in einem Vorgang des Wiederholens eines Frequenzdetektionsvorgangs durch den Frequenzwobbelabschnitt (7a) und eines Phasendetektionsvorgangs durch den Phasenwobbelabschnitt (7b), eine detektierte Oszillationsfrequenz oder ein Phasenwert von der Oszillationsfrequenz oder dem Phasenwert, die durch den vorhergehenden Frequenzdetektionsvorgang oder dem vorhergehenden Phasendetektionsvorgang detektiert worden sind, um eine kleineren Betrag als ein vorgegebener Schwellwert unterscheiden, einzustellen, und
der Wobbelsteuerabschnitt (7c) dafür ausgelegt ist, den Vorgang des Wiederholens eines Frequenzdetektionsvorgangs durch den Frequenzwobbelabschnitt (7a) und eines Phasendetektionsvorgangs durch den Phasenwobbelvorgang (7b) anzuhalten, wenn die zweite Fertigstellungsbestimmungsbedingung erfüllt ist.

7. Mikrowellenheizvorrichtung nach einem der Ansprüche 1 bis 3, wobei
der Wobbelsteuerabschnitt (7c) dafür ausgelegt ist, eine dritte Fertigstellungsbestimmungsbedingung, dass die Male, die ein Frequenzdetektionsvorgang durch den Frequenzwobbelabschnitt (7a) und ein Phasendetektionsvorgang durch den Phasenwobbelabschnitt (7b) wiederholt worden sind, eine vorgegebene Anzahl erreicht hat, einzustellen, und
der Wobbelsteuerabschnitt (7c) dafür ausgelegt ist, den Vorgang des Wiederholens eines Frequenzdetektionsvorgangs durch den Frequenzwobbelabschnitt (7a) und eines Phasendetektionsvorgangs durch den Phasenwobbelvorgang (7b) anzuhalten, wenn die dritte Fertigstellungsbestimmungsbedingung erfüllt ist.

8. Mikrowellenheizvorrichtung nach Anspruch 6, wobei
der Wobbeisteuerabschnitt (7c) dafür ausgelegt ist, basierend auf der zweiten Fertigstellungsbestimmungsbedingung nach dem Anhalten des Vorgangs des Wiederholens eines Frequenzdetektionsvorgangs durch den Frequenzwobbelabschnitt (7a) und eines Phasendetektionsvorgangs durch den Phasenwobbelabschnitt (7b), eine Oszillationsfrequenz und einen Phasenwert, die die reflektierte elektrische Leistung minimieren, und einen Tiefstwert der reflektierten elektrischen Leistung, der durch Frequenzdetektionsvorgänge durch den Frequenzwobbelabschnitt (7a) und durch Phasendetektionsvorgänge durch den Phasenwobbelabschnitt (7b) detektiert worden ist, zu speichern, ferner einen Frequenzdetektionsvorgang durch den Frequenzwobbelabschnitt (7a) durch Festhalten des Phasenwertes des phasenvariablen Anschnitts (3a bis 3d) auf einem Phasenwert, der sich von dem festgehaltenem Phasenwert in dem ersten Frequenzdetektionsvorgang durch den Frequenzwobbelabschnitt (7a) unterscheidet, durchzuführen und ferner, erneut einen Vorgang des Wiederholens eines Frequenzdetektionsvorgangs durch den Frequenzwobbelabschnitt (7a) und eines Phasendetektionsvorgangs durch den Phasenwobbelabschnitt (7b) durchzuführen.

9. Mikrowellenheizvorrichtung nach Anspruch 7, wobei
der Wobbelsteuerabschnitt (7c) dafür ausgelegt ist, basierend auf der dritten Fertigstellungsbestimmungsbedingung nach dem Anhalten des Vorgangs des Wiederholens eines Frequenzdetektionsvorgangs durch den Frequenzwobbelabschnitt (7a) und eines Phasendetektionsvorgangs durch den Phasenwobbelabschnitt (7b), eine Oszillationsfrequenz und einen Phasenwert, die die reflektierte elektrische Leistung minimieren, und einen Tiefstwert der reflektierten elektrischen Leistung, der durch Frequenzdetektionsvorgänge durch den Frequenzwobbelabschnitt (7a) und durch Wobbelvorgänge durch den Phasenwobbelabschnitt (7b) detektiert worden ist, zu speichern, ferner einen Frequenzdetektionsvorgang durch den Frequenzwobbelabschnitt (7a) durch Festhalten des Phasenwertes des phasenvariablen Anschnitts (3a bis 3d) auf einem Phasenwert, der sich von dem festgehaltenem Phasenwert in dem ersten Frequenzdetektionsvorgang durch den Frequenzwobbelabschnitt (7a) unterscheidet, durchzuführen und weiter erneut einen Vorgang des Wiederholens eines Frequenzdetektionsvorgangs durch den Frequenzwobbelabschnitt (7a) und eines Phasendetektionsvorgangs durch den Phasenwobbelabschnitt (7b) durchzuführen.

10. Mikrowellenheizvorrichtung nach einem der Ansprüche 1 bis 3, wobei
der Wobbeisteuerabschnitt (7c) dafür ausgelegt ist, durch Anwenden, als eine Heizbedingung, einer Frequenz und eines Phasenwertes, die die reflektierte elektrische Leistung, die durch einen Vorgang des Wiederholens eines Frequenzdetektionsvorgangs durch den Frequenzwobbelabschnitt (7a) und eines Phasendetektionsvorgangs durch den Phasenwobbelabschnitt (7b) detektiert und gespeichert worden sind, minimieren, einen Heizvorgang zu starten.

## Revendications

1. Dispositif chauffant à micro-ondes comprenant :
un compartiment chauffant (8) apte à accueillir un objet à chauffer (9) ;
une partie oscillante (1a, 1b) comportant un dispositif à semi-conducteurs ;
une partie de division de puissance électrique (2a, 2b) apte à diviser la sortie de la partie oscillante (1a, 1b) en une pluralité de parties ;
une partie à phase variable (3a à 3d) apte à changer les phases de sortie de la partie de division de puissance électrique (2a, 2b) ;
une pluralité de parties amplificatrices (4a à 4d) aptes à amplifier la puissance électrique en sortie de la partie à phase variable (3a à 3d) ou de la partie de division de puissance électrique (2a, 2b) ;
une pluralité de parties d'alimentation (5a à 5d) aptes à alimenter le compartiment chauffant (8) avec les sorties des parties amplificatrices (4a à 4d) ;
une pluralité de parties de détection de puissance électrique (6a à 6d) aptes à détecter la puissance électrique réfléchie qui se propage vers les parties amplificatrices (4a à 4d) depuis le compartiment chauffant (8) en traversant les parties d'alimentation (5a à 5d) ; et
une partie de contrôle (7) apte à contrôler la fréquence d'oscillation de la partie oscillante (1a, 1b) et les phases de sortie de la partie à phase variable (3a à 3d),
**caractérisé en ce que** :
la partie de contrôle (7) comporte
une partie à balayage de fréquence (7a) apte à réaliser une opération de détection de fréquence afin d'acquérir la puissance électrique réfléchie détectée par les parties de détection de puissance électrique (6a à 6d) tout en modifiant 1a fréquence d'oscillation de la partie oscillante (1a, 1b) et en fixant les phases de sortie de la partie à phase variable (3a à 3d), afin de détecter une caractéristique du balayage de fréquence,
une partie de balayage de phase (7b) apte à réaliser une opération de détection de phase afin d'acquérir la puissance électrique réfléchie détectée par les parties de détection de puissance électrique (6a à 6d) tout en modifiant la valeur de phase de la partie à phase variable (3a à 3d) et en fixant la fréquence d'oscillation de la partie oscillante (1a, 1b), afin de détecter une caractéristique du balayage de phase, et
une partie de contrôle de balayage (7c) apte à déterminer une fréquence d'oscillation et une valeur de phase à utiliser pour chauffer l'objet à chauffer (9) à partir de la caractéristique du balayage de fréquence et de la caractéristique du balayage de phase qui sont détectées par la répétition alternée d'une opération de détection de fréquence effectuée par la partie de balayage en fréquence (7a) et d'une opération de détection de phase effectuée par la partie de balayage de phase (7b),
la partie de contrôle de balayage (7c) étant apte à réaliser, tout d'abord, une opération de détection de fréquence par le biais de la partie de balayage de fréquence (7a) afin de détecter une fréquence d'oscillation qui limite la puissance électrique réfléchie, puis une opération de détection de phase par le biais de la partie de balayage de phase (7b) tout en fixant la fréquence d'oscillation de la partie oscillante (1a, 1b) à la fréquence d'oscillation détectée, afin de détecter les phases de sortie qui limitent la puissance électrique réfléchie, et enfin qui est apte à répéter alternativement une opération de détection de la fréquence effectuée par la partie de balayage de fréquence (7a) tout en fixant les phases de sortie de la partie à phase variable à une valeur de phase détectée, et une opération de détection de phase effectuée par la partie de balayage de phase (7b) tout en fixant la fréquence d'oscillation de la partie oscillante (1a, 1b) à une fréquence d'oscillation détectée,
la partie de contrôle de balayage (7c) étant apte à répéter alternativement une opération de détection de fréquence effectuée par la partie de balayage de fréquence (7a) et une opération de détection de phase effectuée par la partie de balayage de phase (7b) jusqu'à ce qu'une condition prédéterminée établissant la complétion de l'opération soit remplie.

2. Dispositif chauffant à micro-ondes selon la revendication 1, dans lequel
la partie de contrôle de balayage (7c) est apte à déterminer une fréquence d'oscillation et une valeur de phase à utiliser pour chauffer l'objet à chauffer (9), à partir d'une caractéristique de balayage de fréquence détectée au cours d'une opération de détection de fréquence réalisée par la partie de balayage de fréquence (7a) et de la caractéristique de balayage de phase détectée au cours d'une opération de détection de phase effectuée par la partie de balayage de phase (7b), avant le début de l'étape de chauffe de l'objet à chauffer.

3. Dispositif chauffant à micro-ondes selon la revendication 1 ou 2, dans lequel
la partie de contrôle de balayage (7c) est apte à stocker, après avoir réalisé une opération de détection de la fréquence par le biais de la partie de balayage de fréquence, au moins la valeur de phase à laquelle la partie à phase variable a été fixée, une fréquence d'oscillation qui a limité la puissance électrique réfléchie, et une valeur minimum de puissance électrique réfléchie, au cours de l'opération précédente de détection de fréquence effectuée par la partie de balayage de fréquence.

4. Dispositif chauffant à micro-ondes selon la revendication 1 ou 2, dans lequel
la partie de contrôle de balayage (7c) est apte à stocker, après avoir réalisé une opération de détection de phase par le biais de la partie de balayage de phase, au moins la fréquence d'oscillation à laquelle la partie oscillante a été fixée, une valeur de phase qui a limité la puissance électrique réfléchie, et une valeur minimum de puissance électrique réfléchie, au cours de l'opération précédente de détection de phase effectuée par la partie de balayage de phase.

5. Dispositif chauffant à micro-ondes selon l'une quelconque des revendications 1 à 3, dans lequel
la partie de contrôle de balayage (7c) est apte à fixer une première condition d'établissement de complétion selon laquelle une valeur minimum de puissance électrique réfléchie détectée par le biais d'une opération de détection de fréquence effectuée par la partie de balayage de fréquence (7a) et par le biais d'une opération de détection de phase effectuée par la partie de balayage de phase (7b) est passée sous une valeur seuil prédéterminée, et
la partie de contrôle de balayage (7c) est apte à interrompre une opération visant à répéter une opération de détection de fréquence effectuée par la partie de balayage de fréquence (7a) et une opération de détection de phase effectuée par la partie de balayage de phase (7b) lorsque la première condition d'établissement de complétion est remplie.

6. Dispositif chauffant à micro-ondes selon l'une quelconque des revendications 1 à 3, dans lequel
la partie de contrôle de balayage (7c) est apte à fixer une deuxième condition d'établissement de complétion selon laquelle, lors d'une opération visant à répéter une opération de détection de fréquence effectuée par la partie de balayage de fréquence (7a) et une opération de détection de phase effectuée par la partie de balayage de phase (7b), la fréquence d'oscillation détectée ou la valeur de phase détectée diffère de la fréquence d'oscillation ou de la valeur de phase détectée au cours de l'opération précédente de détection de fréquence ou de détection de phase, selon une moindre quantité qu'une valeur seuil prédéterminée, et
la partie de contrôle de balayage (7c) est apte à interrompre l'opération visant à répéter une opération de détection de fréquence effectuée par la partie de balayage de fréquence (7a) et une opération de détection de phase effectuée par la partie de balayage de phase (7b), lorsque la deuxième condition d'établissement de complétion est remplie.

7. Dispositif chauffant à micro-ondes selon l'une quelconque des revendications 1 à 3, dans lequel
la partie de contrôle de balayage (7c) est apte à fixer une troisième condition d'établissement de complétion selon laquelle le nombre de fois qu'une opération de détection de fréquence effectuée par la partie de balayage de fréquence (7a) et qu'une opération de détection de phase effectuée par la partie de balayage de phase (7b) ont été répétées a atteint un nombre prédéterminé, et
la partie de contrôle de balayage (7c) est apte à interrompre une opération visant à répéter une opération de détection de fréquence effectuée par la partie de balayage de fréquence (7a) et une opération de détection de phase effectuée par la partie de balayage de phase (7b), lorsque la troisième condition d'établissement de complétion est remplie.

8. Dispositif chauffant à micro-ondes selon la revendication 6, dans lequel
la partie de contrôle de balayage (7c), après avoir interrompu l'opération visant à répéter une opération de détection de fréquence effectuée par la partie de balayage de fréquence (7a) et une opération de détection de phase effectuée par la partie de balayage de phase (7b) en se fondant sur la deuxième condition d'établissement de complétion, est apte à stocker une fréquence d'oscillation et une valeur de phase qui limitent la puissance électrique réfléchie et une valeur minimum de puissance électrique réfléchie qui ont été détectées grâce aux opérations de détection de fréquence effectuées par la partie de balayage de fréquence (7a) et aux opérations de détection de phase effectuées par la partie de balayage de phase (7b), puis à effectuer une opération de détection de fréquence par le biais de la partie de balayage de fréquence (7a) en fixant la valeur de phase de la partie à phase variable (3a à 3d) à une valeur de phase différente de la valeur de phase fixée lors de la première opération de détection de fréquence effectuée par la partie de balayage de fréquence (7a) et, ensuite, à effectuer de nouveau une opération visant à répéter une opération de détection de fréquence effectuée par la partie de balayage de fréquence (7a) et une opération de détection de phase effectuée par la partie de balayage de phase (7b).

9. Dispositif chauffant à micro-ondes selon la revendication 7, dans lequel
la partie de contrôle de balayage (7c), après avoir interrompu l'opération visant à répéter une opération de détection de fréquence effectuée par la partie de balayage de fréquence (7a) et une opération de détection de phase effectuée par la partie de balayage de phase (7b) en se fondant sur la troisième condition d'établissement de complétion, est apte à stocker une fréquence d'oscillation et une valeur de phase qui limitent la puissance électrique réfléchie et une valeur minimum de puissance électrique réfléchie qui ont été détectées grâce aux opérations de détection de fréquence effectuées par la partie de balayage de fréquence (7a) et aux opérations de balayage de phase effectuées par la partie de balayage de phase (7b), puis à effectuer une opération de détection de fréquence par le biais de la partie de balayage de fréquence (7a) en fixant la valeur de phase de la partie à phase variable (3a à 3d) à une valeur de phase différente de la valeur de phase fixée lors de la première opération de détection de fréquence effectuée par la partie de balayage de fréquence (7a) et, ensuite, à effectuer de nouveau une opération visant à répéter une opération de détection de fréquence effectuée par la partie de balayage de fréquence (7a) et une opération de détection de phase effectuée par la partie de balayage de phase (7b).

10. Dispositif chauffant à micro-ondes selon l'une quelconque des revendications 1 à 3, dans lequel
la partie de contrôle de balayage (7c) est apte à lancer une opération de chauffe en utilisant comme condition de chauffe une fréquence et une valeur de phase qui limitent la puissance électrique réfléchie, celles-ci ayant été détectées et stockées grâce à une opération visant à répéter une opération de détection de fréquence effectuée par la partie de balayage de fréquence (7a) et une opération de détection de phase effectuée par la partie de balayage de phase (7b).
